# FASCICULE DE BREVET EUROPEEN

(11) **EP 1 646 678 B1**
(45) Date de publication et mention de la délivrance du brevet: **23.11.2011**
(21) Numéro de dépôt: 04766210.1
(22) Date de dépôt: 14.07.2004
(51) Int. Cl.: C08J 11/08, C08J 3/16, C08L 27/06

(54) **PROCEDE DE RECUPERATION D UN POLYMERE EN SOLUTION**
VERFAHREN ZUR GEWINNUNG EINES GELÖSTEN POLYMERS
METHOD FOR RECOVERING A POLYMER IN SOLUTION

(30) Priorité: 15.07.2003 FR 0308690
(43) Date de publication de la demande: 19.04.2006
(73) Titulaire: SOLVAY (Société Anonyme), 1050 Bruxelles (BE)
(72) Inventeur: FASSIAU, Eric, B-1120 Bruxelles (BE); GEETS, Denis, B-1950 Kraainem (BE)
(74) Mandataire: Jacques, Philippe
(86) Numéro de dépôt international: PCT/EP2004/051480
(87) Numéro de publication internationale: WO 2005/017010

(56) Documents cités:
- EP-A- 0 644 230
- WO-A-01/70865
- FR-A- 2 337 164

## Description

La présente invention concerne un procédé de récupération d'un polymère en solution.

Les polymères sont abondamment utilisés sous des formes diverses, principalement à l'état solide. Toutefois, il arrive souvent qu'à un moment donné de leur existence, ils soient en solution dans un solvant dont il faut alors les extraire. On est par exemple confronté à des solutions de polymère à la fin de certains procédés de polymérisation (dits "en solution"), au cours de certains procédés de recyclage, lors du nettoyage de certaines installations de fabrication d'objets ou de peintures à base de polymères... La récupération de ces polymères en solution se fait généralement par précipitation avec un non solvant. En vue d'obtenir un polymère sous une forme finement divisée et avec une granulométrie aussi fine et régulière que possible, il est connu d'effectuer ladite précipitation en présence d'un agent dispersant.

Ainsi, la demande de brevet WO 01/70865 au nom de SOLVAY décrit un procédé de recyclage d'une matière plastique par mise en solution et précipitation en présence d'un agent dispersant qui est un agent tensioactif tel que la bentonite, l'alcool polyvinylique, les éthers de cellulose...

Toutefois, la demanderesse a constaté que certains de ces agents avaient une influence négative sur le PSA (poids spécifique apparent) des particules de polymère obtenues et leur conféraient en fait un caractère poreux. En outre, l'effet de certains de ces agents peut être fortement réduit en présence de plastifiant. La demanderesse a alors trouvé que, de manière surprenante, le fait de recourir à au moins deux agents dispersants ayant un degré d'affinité (c.à.d. une solubilité et/ou une miscibilité) différent vis-à-vis du non solvant et du solvant permettait d'atténuer ces phénomènes et d'obtenir des particules présentant un rapport PSA/taille élevé. Un autre avantage surprenant du recours à un système binaire d'agents dispersants est qu'il permet de traiter des solutions plus concentrées en polymère et également, de réduire les quantités (débits) de non solvant à ajouter pour éviter l'agglomération des particules de polymère précipité.

La présente invention concerne dès lors un procédé de récupération d'au moins un polymère en solution dans un solvant par précipitation au moyen d'un fluide non solvant, selon lequel la précipitation a lieu dans un milieu de précipitation comprenant deux agents dispersants dont un (agent dispersant (I)) a une affinité plus grande pour le non solvant et l'autre (agent dispersant (II)), une affinité plus grande pour le solvant

Le polymère dont la récupération est visée par le procédé selon la présente invention peut être de toute nature. Il peut s'agir d'une résine thermoplastique ou d'un élastomère, mais en tout cas d'une résine que l'on peut dissoudre dans un solvant et qui donc, n'est pas ou peu réticulée. Il peut s'agir d'une résine non usagée (ou vierge), qui n'a subi aucune mise en forme par fusion excepté une éventuelle granulation, ou d'une résine usagée (déchets de production ou résine recyclée). Il peut s'agir d'un polymère apolaire, tel qu'une polyoléfine et un particulier, un polymère de l'éthylène (PE) ou du propylène (PP). Il peut également s'agir d'un polymère polaire tel qu'un polymère halogénée et en particulier, un polymère du chlorure de vinyle (PVC), du chlorure de vinylidène (PVDC), du fluorure de vinylidène (PVDF) ... ; ou d'EVOH (copolymère d'éthylène et d'alcool vinylique). Il peut également s'agir d'un mélange d'au moins deux tels polymères de même nature ou de nature différente. De bons résultats ont été obtenus avec les polymères polaires, halogénés en particulier et tout particulièrement, avec le PVC. Par PVC, on entend désigner tout homo- ou copolymère contenant au moins 50% en poids de chlorure de vinyle.

Le polymère qui a été dissous dans le solvant peut contenir un ou plusieurs additifs usuels tels que plastifiant(s), stabilisant(s), charge(s), pigment(s)... On appelle généralement « compound » de type de mélange à base de polymère(s) et d'additif(s). Un avantage du procédé selon l'invention est qu'il permet de récupérer ces additifs c.à.d. de les co-précipiter avec le polymère. Ainsi par exemple, dans le cas où le polymère est le PVC, il peut s'agir de PVC « souple » c.à.d. contenant un ou plusieurs plastifiants généralement à raison de 75% ou moins, voire 70% ou moins, voire même 65% ou moins. Les plastifiants du PVC sont en général des esters organiques tels que les phtalates, adipates, trimellitates..., les phtalates et en particulier, le DOP (di-octyl-phtalate), étant les plus utilisés. Le procédé selon l'invention donne de bons résultas dans le cas des polymères (et en particulier, du PVC) plastifiés.

Le solvant (substance capable de dissoudre le polymère) est de préférence choisi parmi les liquides ayant un paramètre de solubilité (dont une définition et des valeurs expérimentales figurent dans "Properties of Polymers", D.W. Van Krevelen, Edition de 1990, pp.200-202, ainsi que dans "Polymer Handbook", J. Brandrup and E.H. Immergut, Editors, Second Edition, p.IV-337 à IV-359) voisin de celui du polymère à dissoudre et/ou présentant des interactions fortes avec celui-ci (liens hydrogènes par exemple). Le terme « voisin » équivaut généralement à « ne s'écartant pas de plus de 6 unités ». Il s'agit en général d'un solvant organique, de préférence polaire tel que la MEK (méthyl éthyl cétone), qui donne de bons résultats avec de nombreux polymères et en particulier, avec les polymères halogénés tels que le PVC. Quant au non solvant, il est de préférence choisi comme ayant un paramètre de solubilité différent de celui du polymère à dissoudre et ne présentant pas d'interactions fortes avec ceux-ci. Le terme « différent » équivaut généralement à s'écartant de plus de 6 unités. Il est entendu que par solvant et non solvant, on entend aussi bien des substances simples que des mélanges de substances. Les liquides inorganiques sont des non solvants qui conviennent bien, l'eau étant généralement le non solvant préféré (dans le cas des polymères non hydrosolubles bien évidemment) compte tenu des préoccupations environnementales et économiques généralement impliquées dans les procédés industriels. En outre, l'eau présente l'avantage de constituer un azéotrope avec certains solvants polaires tels que la MEK ce qui permet de faciliter l'élimination du solvant par distillation azéotropique.

Les solutions que l'on peut traiter par le procédé selon la présente invention ont une concentration en polymère telle que leur viscosité ne perturbe pas le bon déroulement du procédé (il faut notamment que le non solvant puisse progressivement être mélangé et/ou dispersé dans le milieu de précipitation pour que les deux puissent interagir et que la précipitation puisse effectivement avoir lieu). La présence des agents dispersants dans le milieu de précipitation permet généralement de travailler avec des solutions plus concentrées en polymère (ou de manière plus générale : en compound). Ainsi, on peut travailler avec des teneurs en polymère (compound) supérieures ou égales à 100 g par litre de solvant, voire à 200 g/l et parfois même, à 300 g/l. Toutefois, cette teneur ne dépasse généralement pas 500 g/l, voire 400 g/l.

Selon l'invention, on ajoute à la solution de polymère, un fluide non solvant en une quantité suffisante pour provoquer la précipitation complète du polymère sous forme de particules. Il n'est pas nuisible que le non solvant injecté contienne éventuellement une concentration minoritaire (en poids) de solvant ; ceci est intéressant dans la mesure où (comme il sera exposé ci-après pour les procédés de recyclage notamment), une éventuelle étape ultérieure du procédé peut précisément fournir une telle source de non solvant, que l'on peut ainsi réutiliser sans épuration particulière.

Dans le procédé selon l'invention, la morphologie des particules de polymère obtenues sera également fonction des conditions d'ajout du non solvant : vitesse (débit) d'ajout, agitation, pression, température... Un moyen permettant de réduire la taille des particules de polymère est d'ajouter le non solvant de manière progressive dans le solvant contenant le polymère dissous, avec un débit optimisé et d'appliquer à l'ensemble, un taux de cisaillement également optimisé en fonction de la taille de particules souhaitée.

Généralement, le solvant et le non solvant sont des fluides qui présentent une miscibilité sur une certaine gamme de concentrations seulement. En effet, comme expliqué précédemment, il est préférable que le non solvant puisse interagir avec les molécules de solvant et/ou de polymère pour provoquer la précipitation et donc, soit au moins légèrement compatible (miscible) avec le solvant à faible concentration (donc, au début de son ajout dans la solution de polymère). Par ailleurs, solvant et non solvant sont souvent des liquides ayant une structure chimique fort différente (pour être respectivement compatible et incompatible avec le polymère) et de ce fait, leur miscibilité est rarement totale. Aussi, généralement, au cours d'une introduction progressive de non solvant dans la solution de polymère, on assiste d'abord à une séparation de phases c.à.d. qu'à un moment donné, on passe d'un milieu monophasique constitué d'une phase riche en solvant contenant le polymère dissous et un peu de non solvant, à un milieu biphasique constitué d'une part, d'une phase continue riche en solvant dans laquelle le polymère est dissous et d'autre part, d'une phase dispersée constituée de gouttes riches en non solvant. Ensuite, après ajout d'une quantité donnée de non solvant (déterminée par le diagramme de phases entre solvant et non solvant), on assiste généralement à une inversion de phases, c.à.d. que la phase continue (majoritaire) devient alors la phase riche en non solvant et que la phase dispersée est alors constituée de gouttes de phase riche en solvant contenant le polymère dissous.

Avec certains polymères tels que les polymères halogénés et le PVC en particulier (et tout particulièrement en utilisant respectivement la MEK et l'eau comme solvant et non solvant), la demanderesse a constaté que bien que la précipitation du polymère démarre avant cette inversion de phases, la morphologie des particules de polymère obtenues est en fait essentiellement indépendante des étapes antérieurs à cette inversion et est par contre principalement dépendante des conditions opératoires pendant et après l'inversion de phases.

Un événement important dans le procédé selon l'invention est donc l'inversion de phases. Selon une variante préférée de la présente invention, la composition à l'inversion de phases est approchée par ajout de non solvant sous forme liquide. En effet, l'injection de vapeur n'a en fait une influence positive sur la morphologie des particules de polymères que pendant ou après l'inversion de phases et il est donc inutile que le non solvant soit sous forme de vapeur avant ce stade. Selon cette variante, le non solvant est initialement introduit dans le milieu de précipitation sous forme liquide uniquement et ce en une quantité (Q') non nulle mais inférieure à la quantité (Q) requise pour provoquer l'inversion de phases, et il est par la suite introduit dans le milieu de précipitation au moins partiellement sous forme de vapeur. La quantité (Q), qui dépend de la nature du solvant et du non solvant, de la température, de la pression et dans certains cas, de la quantité de polymère dissous, se détermine aisément de manière expérimentale. Il suffit d'introduire progressivement du non solvant sous forme liquide dans la solution jusqu'à observation de l'inversion de phases (aisément identifiable pour l'homme du métier) et de mesurer la quantité de non solvant ajoutée à ce moment là, qui est la quantité Q. De bons résultats ont été obtenus avec une quantité Q' supérieure ou égale à 50% (en volume) de la quantité Q, voire supérieure ou égale à 70%, voire même à 90%. A noter que par « milieu de précipitation », on entend désigner le milieu dans lequel le polymère précipite et qui contient au départ uniquement le polymère et le solvant, et par la suite, au fur et à mesure de leur introduction, les agents dispersants, le non solvant, les additifs...

Selon l'invention, la précipitation doit avoir lieu en présence de deux agents dispersants différents et de manière préférée, le moment d'introduction des ces agents dispersants est optimisé en fonction du déroulement de la précipitation. Par « agent dispersant », on entend désigner une substance qui favorise la dispersion d'une phase discrète (qui peut être formée soit de gouttelettes de liquide, soit de particules solides) dans une autre phase, continue. Cette substance agit généralement à l'interface entre les deux phases et elle prévient l'agglomération de la phase discrète (c.à.d. qu'elle favorise l'obtention d'une dispersion fine et régulière).

Ainsi, dans une variante avantageuse du procédé selon l'invention, l'agent de dispersion ayant l'affinité la plus élevée vis-à-vis du non solvant (I) est principalement ajouté au milieu de précipitation avant l'inversion de phases de manière à être présent durant cette dernière. Par « principalement », on entend en une fraction pondérale majoritaire (par rapport à la quantité totale de l'agent dispersant (I) ajoutée durant le procédé), c.à.d. supérieure à 50%, mais qui peut être supérieure ou égale à 70%, voire à 90% en poids. De manière particulièrement préférée, la totalité de l'agent dispersant (I) sera ajoutée au milieu de précipitation avant l'inversion de phases.

De même, selon une autre variante avantageuse du procédé selon l'invention, l'agent dispersant ayant l'affinité la plus élevée vis-à-vis du solvant est principalement ajouté au milieu de précipitation après l'inversion de phases, le terme « principalement » étant défini comme précédemment. La demanderesse a en effet constaté que le fait qu'il soit présent en des quantités trop importantes avant et lors de l'inversion de phases augmentait la porosité (et donc, dégradait le PSA) des particules de polymère.

Le fait d'optimiser la nature et le moment d'introduction des agents dispersants permet d'optimiser la morphologie des particules et donc d'obtenir une poudre compacte de petites particules

De bons résultats ont été obtenus en ajoutant la totalité de l'agent dispersant (I) et une fraction pondérale minoritaire (par exemple supérieure ou égale à 10%, voire à 15% ou mieux, à 20%, mais inférieure à 50%, voire à 40% ou mieux, à 30%) de l'agent dispersant (II) après dissolution du polymère et avant ajout du non solvant, et le reste de l'agent dispersant (II) après inversion de phases.

L'agent dispersant (I) décrit ci-dessus est généralement utilisé en une quantité au moins égale à celle de l'agent dispersant (II), voire supérieure à celle-ci d'un facteur supérieur ou égal à 2, voire à 3. La teneur en agent dispersant (I) est généralement supérieure ou égale à 0.01 % en poids par rapport au poids de polymère, de préférence supérieure ou égale à 0.05%, ou mieux, supérieure ou égale à 0.1 %. La teneur en agent dispersant (I) est généralement inférieure ou égale à 5%, voire 2%, ou mieux, 1%.

Les agents dispersants utilisés dans le procédé selon l'invention peuvent être de nature quelconque. Toutefois, en particulier lorsque le non solvant est l'eau, les agents dispersants sont avantageusement choisis parmi les éthers de cellulose et les alcools polyvinyliques. Dans le cadre de cette variante de l'invention, on entend désigner par « eau », un milieu aqueux ayant une teneur pondérale majoritaire (donc contenant plus de 50% en poids, voire plus de 60% et de préférence, plus de 70% en poids) en eau. Il s'agit avantageusement d'eau pure ou d'eau contenant une quantité minoritaire (en poids) de solvant. Parmi les éthers de cellulose, les méthyl-celluloses substituées et en particulier, celles substituées par des groupements hydroxypropyl, donnent de bons résultats. Toutefois, de meilleurs résultats sont généralement obtenus avec les alcools polyvinyliques (POVAL). Dans ce cas, les agents dispersants (I) et (II) présentent des taux d'hydrolyse (TH, mesuré en hydrolysant les groupes acétates par une base (NaOH) et en effectuant un dosage de la base qui n'a pas réagi au moyen d'un acide (HCl)) différents, l'agent dispersant (I) ayant un TH supérieur à celui de l'agent dispersant (II). De bons résultats ont été obtenus lorsque l'agent dispersant (I) présente un TH supérieur ou égal à 65%, voire à 67% ou même, à 70%, mais inférieur ou égal à 90%, voire à 85%, ou mieux à 80%. De bons résultats ont également été obtenus lorsque l'agent dispersant (II) présente un TH inférieur ou égal à 60%, voire à 55%. Des résultats particulièrement avantageux sont obtenus lorsqu'à la fois les agents dispersants (I) et (II) présentent des TH contenus dans les fourchettes précitées.

Un autre paramètre important lors du choix des agents dispersants en général, et des POVAL en particulier, est leur viscosité en solution aqueuse. Ainsi, la viscosité d'une solution à 4% d'agent dispersant à 20°C (exprimée en mPa.s) est :
- pour l'agent dispersant I, avantageusement de 1 à 300, voire de 1.5 à 250, ou mieux : de 2 à 200
- pour l'agent dispersant II, avantageusement de 1 à 20000, voire de 1.5 à 10000, ou mieux : de 2 à 5000.

Généralement, lorsque la précipitation est terminée, on est en présence d'une suspension de particules de polymère dans un milieu riche en non solvant. La proportion pondérale de particules solides dans cette suspension peut être supérieure ou égale à 10%, voire à 20% et même, à 30% sans qu'il n'y ait agglomération desdites particules, la présence des agents dispersants étant bénéfique de ce point de vue. Toutefois, cette proportion ne dépasse avantageusement pas 80%, voire 65%, ou mieux : 50%.

Les particules de polymère contenues dans la suspension sont recueillies par tout moyen adéquat : thermique (évaporation du solvant, éventuellement par distillation azéotropique : voir ci-dessus), mécanique (filtration, centrifugation...) ou mixte (atomisation par exemple). Dans le cas des polymères sensibles à la température (tel que le PVDC par exemple), on préférera les méthodes mécaniques. Les particules recueillies peuvent alors être rincées, séchées, traitées par tout moyen connu avant stockage, commercialisation et/ou mise en oeuvre.

La solution de polymère à laquelle s'applique la présente invention peut être obtenue par tout moyen approprié. Toutefois, la dissolution du polymère dans le solvant s'effectue généralement sous une pression au moins égale à la pression atmosphérique, voire au moins égale à 1.5 bars. Avantageusement, cette pression n'excède pas 10 bars, de préférence 5 bars.

La température de dissolution est généralement d'au moins 75°C, voire 100°C ; elle n'excède généralement pas 125°C, voire 110°C.

Lors de cette dissolution, il peut s'avérer avantageux de travailler sous atmosphère inerte, par exemple sous azote, pour éviter tout risque d'explosion et de dégradation du solvant et/ou du non solvant.

Après ou durant la dissolution du polymère, mais avant la précipitation, on peut ajouter à la solution, un ou plusieurs additifs. Par "additif" selon cette variante de l'invention, on entend désigner tout composé organique ou inorganique non présent dans les matières plastiques d'origine, ou présent dans une quantité inférieure à celle désirée. A titre d'additifs inorganiques, on peut citer les pigments inorganiques, le noir de carbone, les poudres métalliques, les nanoparticules de natures diverses ... A titre d'additifs organiques, on peut citer les pigments organiques, les stabilisants, les oligomères, plastifiants ...

Le procédé selon la présente invention peut être intégré à tout procédé impliquant la récupération d'un polymère à partir d'une solution. En particulier, il peut faire partie d'un procédé de recyclage d'articles à base de polymère(s). Ainsi, la présente invention concerne également un procédé de recyclage d'au moins un article à base d'au moins un polymère, selon lequel
a) si nécessaire, on déchiquette l'article en des fragments d'une dimension moyenne de 1 cm à 50 cm
b) on met l'article ou les fragments d'article en contact avec un solvant capable de dissoudre le polymère
c) on récupère le polymère en solution en utilisant le procédé décrit ci-dessus.

Les articles dont il est question peuvent être des solides de toute forme (feuille, plaque, tube...), mono- ou multicouche ; ils peuvent inclure plusieurs polymères (dont alors généralement un seul sera dissous sélectivement, bien que l'article puisse également servir à la fabrication d'un alliage) et également, des matières non polymériques (renforts, fixations...) qui seront alors éliminées avant traitement de la solution par le procédé décrit ci avant.

A noter que dans le cas des articles à base de plusieurs polymères, il peut s'avérer intéressant d'éliminer l'autre (ou un des autres) polymère(s) avant mise en solution du polymère que l'on désire récupérer. Ainsi par exemple, si le solvant choisi est susceptible de dissoudre plusieurs des polymères de l'article, il peut s'avérer intéressant de d'abord éliminer le polymère gênant, par exemple au moyen d'un autre solvant, qui ne dissout pas le polymère à récupérer. A noter que lorsqu'un des polymères est semi cristallin, sa solubilité peut être diminuée par recuit (c.à.d. un séjour à une température et pendant une durée adaptée pour obtenir une cristallisation maximale). Un exemple de tels polymères sont le PVC (polymère amorphe) et le PVDC (polymère semi cristallin). Ainsi par exemple, un traitement de recuit (durant 1h à 70°C ou 2 jours à 40°C par exemple) sur un complexe PVC/PVDC permet de rendre ce dernier insoluble dans la MEK à 50°C et donc, de dissoudre sélectivement le PVC dans la MEK à 50°C (voire même à 75°C) et d'appliquer le procédé tel que décrit ci-dessus à la solution obtenue. A noter également que la composition du solvant peut être adaptée pour dissoudre sélectivement certains polymères d'une structure.

Dans le procédé de recyclage décrit ci-dessus, les conditions de solubilisation (pression, température, agitation...) du polymère et de séparation éventuelle des éléments non polymériques ou à base d'un polymère gênant avant précipitation (par filtration, mise en solution préalable...), seront optimisées par tout moyen connu de l'homme du métier. Un enseignement utile à cet effet figure dans les demandes EP 945481, WO 01/23463 et WO 01/70865 au nom de SOLVAY.

Un avantage important d'un tel procédé de recyclage est qu'il peut fonctionner en boucle fermée (soit en continu, soit par batch, mais avec recirculation quasi-totale de la phase liquide, à l'exception des pertes notamment par adsorption sur les particules de polymère obtenues), sans générer de rejets. En effet, le milieu liquide obtenu après précipitation et séparation des particules de polymère et qui est principalement constitué de non solvant (contenant généralement les agents dispersants) peut être recyclé éventuellement moyennant un traitement adéquat. Ce traitement peut consister en une ou plusieurs distillations, floculations (pour éliminer et/ou récupérer les agents dispersants, décantations, lavages...et en des combinaisons de ces traitements. De même, lorsque le solvant a été éliminé du milieu de précipitation par distillation azéotropique avec le non solvant, les vapeurs résultant de cette distillation peuvent être condensées et constituer une phase liquide qui peut être traitée comme décrit ci avant. De préférence, ce traitement inclut au moins une décantation et dans ce cas, il est avantageux que ladite décantation se déroule au moins partiellement en présence d'un agent de séparation de phases. Ainsi, dans le cas ou plusieurs décantations ont lieu (en parallèle ou en série), il est avantageux qu'au moins l'une d'entre elles ait lieu en présence d'un agent dispersant.

Un tel procédé de recyclage a été appliqué avec succès à des articles comprenant du PVC.

### Exemples de référence R1, R2 et R3 (non conformes à l'invention) et exemples 4 à 9 (conformes à l'invention)

On a préparé (en 1 heure, à 75°C, sous pression atmosphérique et avec un agitateur hélicoïdal tournant à 250 tours/min) une solution à 11% en poids de PVC plastifié avec du DOP (PVC de Kw 71 avec 25% en poids de DOP) dans de la MEK.

On a prélevé plusieurs fractions de cette solution qui ont été soumises à précipitation dans les conditions suivantes :
- 3500 g de solution ont été chauffés à 75°C
- l'agitation a alors été enclenchée et portée à 1000 tours/minutes et 2,6 kg de vapeur ont été introduits pendant 40 minutes de manière à évaporer le solvant et provoquer la précipitation du compound de PVC
- le solvant a été récupéré par condensation pour réutilisation
- le compound de PVC en suspension dans de l'eau a été filtré sur un filtre métallique de 125 µm et a ensuite été séché en étuve sous vide (0.2 bara) à 80°C pendant 5 heures.
- la poudre de compound de PVC précipité a alors été tamisée sur un tamis de 1 mm.

Les agents dispersants testés sont le POVAL® L9 (agent dispersant I ; alcool polyvinylique de TH = 71%) et le POVAL® LM10HD (agent dispersant II ; alcool polyvinylique de TH = 40%). Ceux-ci ont été utilisés de diverses manières (concentration et moment d'introduction) détaillées dans le tableau ci-dessous.

Le résultat de ces essais figure également dans ce tableau qui reprend la concentration finale en PVC de la suspension (en % poids par rapport au poids total de la suspension), la nature, quantité et le mode d'introduction des agents dispersants, le PSA (en g/cm³) et le diamètre moyen (en µm) des particules obtenues, ainsi que le rapport de ces 2 paramètres, qui constitue un indice de la qualité des particules de polymère obtenues.

| Exemple n° | [PVC] suspension | POVAL ® L9 direct | POVAL®LM10HD direct | POVAL®LM10HD différé | PSA | Diamètre moyen (d) | PSA/d |
|---|---|---|---|---|---|---|---|
| | (% poids) | (% poids) | (% poids) | (% poids) | (g/cm³) | (µm) | |
| R1 | 11 | 0.3 | - | - | 580 | 390 | 1.48 |
| R2 | 11 | - | 0.3 | - | 450 | 310 | 1.45 |
| R3 | 18 | 0.3 | - | - | 620 | 510 | 1.22 |
| 4 | 11 | 0.3 | 0.1 | - | 460 | 275 | 1.67 |
| 5 | 11 | 0.3 | 0.3 | - | 410 | 250 | 1.64 |
| 6 | 11 | 0.3 | - | 0.3 | 520 | 285 | 1.82 |
| 7 | 11 | 0.3 | 0.05 | 0.25 | 505 | 260 | 1.94 |
| 8 | 11 | 0.3 | 0.02 | 0.28 | 480 | 270 | 1.78 |
| 9 | 18 | 0.3 | 0.05 | - | 630 | 320 | 1.97 |

| | | | | | | | |
|---|---|---|---|---|---|---|---|
| Direct = introduction lors de la mise en solution Différé = introduction après l'inversion de phases | | | | | | | |

## Revendications

1. Procédé de récupération d'au moins un polymère en solution dans un solvant par précipitation au moyen d'un fluide non solvant, **caractérisé en ce que** la précipitation a lieu dans un milieu de précipitation comprenant deux agents dispersants dont un (agent dispersant (I)) a une affinité plus grande pour le non solvant et l'autre (agent dispersant (II)), une affinité plus grande pour le solvant.

2. Procédé selon la revendication 1, **caractérisé en ce que** le polymère est le PVC.

3. Procédé selon l'une quelconques des revendications précédentes, selon lequel :
- le non solvant est introduit progressivement dans le milieu de précipitation et au cours de cette introduction, on assiste d'abord à une séparation de phases (en une phase continue riche en solvant dans laquelle le polymère est dissous et en une phase dispersée constituée de gouttes riches en non solvant) ; et ensuite, à une inversion de phases (la phase continue devenant alors la phase riche en non solvant et la phase dispersée, celle riche en solvant contenant le polymère dissous)
- le non solvant est initialement introduit dans le milieu de précipitation sous forme liquide uniquement et ce en une quantité (Q') non nulle mais inférieure à la quantité (Q) requise pour provoquer l'inversion de phases, et il est par la suite introduit dans le milieu de précipitation au moins partiellement sous forme de vapeur.

4. Procédé selon l'une quelconques des revendications précédentes, **caractérisé en ce que** l'agent dispersant (I) est principalement ajouté au milieu de précipitation avant l'inversion de phases.

5. Procédé selon la revendication précédente, **caractérisé en ce que** l'agent dispersant (II) est principalement ajouté au milieu de précipitation après l'inversion de phases.

6. Procédé selon la revendication précédente, **caractérisé en ce que** la totalité de l'agent dispersant (I) et une fraction pondérale minoritaire (inférieure à 50%) de l'agent dispersant (II) sont introduits dans le milieu de précipitation avant ajout du non solvant, et **en ce que** le reste de l'agent dispersant (II) est introduit dans le milieu de précipitation après inversion de phases.

7. Procédé selon l'une quelconque des revendications précédentes, **caractérisé en ce que** le non solvant est l'eau et **en ce que** les agents dispersants sont choisis parmi les éthers de cellulose et les alcools polyvinyliques.

8. Procédé selon la revendication précédente, **caractérisé en ce que** les agents dispersants sont des alcools polyvinyliques à taux d'hydrolyse différents, l'agent dispersant (I) ayant un taux d'hydrolyse (TH) supérieur à celui de l'agent dispersant (II).

9. Procédé selon la revendication précédente, **caractérisé en ce que** l'agent dispersant (I) a un TH de 65 à 90% et **en ce que** le l'agent dispersant (II) a un TH inférieur ou égal à 60%.

10. Procédé de recyclage d'au moins un article à base d'au moins un polymère, selon lequel
a) si nécessaire, on déchiquette l'article en des fragments d'une dimension moyenne de 1 cm à 50 cm
b) on met l'article ou les fragments d'article en contact avec un solvant capable de dissoudre le polymère
c) on récupère le polymère en solution en utilisant un procédé selon l'une quelconque des revendications précédentes.

## Claims

1. Process for recovering at least one polymer in solution in a solvent by precipitation by means of a non-solvent fluid, **characterized in that** the precipitation takes place in a precipitation medium comprising two dispersants of which one (dispersant (I)) has a greater affinity for the non-solvent and the other (dispersant (II)) has a greater affinity for the solvent.

2. Process according to Claim 1, **characterized in that** the polymer is PVC.

3. Process according to either of the preceding claims, whereby :
- the non-solvent is introduced gradually into the precipitation medium and, in the course of this introduction, there is first a phase separation (into a continuous phase rich in solvent, in which the polymer is dissolved, and into a disperse phase, consisting of droplets rich in non-solvent) and then there is a phase inversion (the continuous phase then becoming the phase rich in non-solvent, and the disperse phase becoming the phase rich in solvent containing the dissolved polymer)
- the non-solvent is initially introduced into the precipitation medium in liquid form only and in a quantity (Q') which is not zero but is less than the quantity (Q) required to bring about the phase inversion, and is subsequently introduced into the precipitation medium at least partly in vapour form.

4. Process according to any one of the preceding claims, **characterized in that** the dispersant (I) is primarily added to the precipitation medium before phase inversion.

5. Process according to the preceding claim, **characterized in that** the dispersant (II) is primarily added to the precipitation medium after phase inversion.

6. Process according to the preceding claim, **characterized in that** the entirety of the dispersant (I) and a minority weight fraction (less than 50%) of the dispersant (II) are introduced into the precipitation medium before the non-solvent is added and **in that** the remainder of the dispersant (II) is introduced into the precipitation medium after phase inversion.

7. Process according to any one of the preceding claims, **characterized in that** the non-solvent is water and **in that** the dispersants are selected from cellulose ethers and polyvinyl alcohols.

8. Process according to the preceding claim, **characterized in that** the dispersants are polyvinyl alcohols having different degrees of hydrolysis, the dispersant (I) having a degree of hydrolysis (DH) greater than that of the dispersant (II).

9. Process according to the preceding claim, **characterized in that** the dispersant (I) has a DH of 65 % to 90 % and **in that** the dispersant (II) has a DH less than or equal to 60 %.

10. Process for recycling at least one article based on at least one polymer, whereby
a) if necessary, the article is shredded into fragments with an average size of 1 cm to 50 cm
b) the article or article fragments is or are contacted with a solvent able to dissolve the polymer
c) the polymer in solution is recovered using a process according to any one of the preceding claims.

## Patentansprüche

1. Verfahren zur Rückgewinnung mindestens eines Polymers, das in Lösung in einem Lösemittel vorliegt, durch Fällung mittels eines Fluids ohne Lösemitteleigenschaften, **dadurch gekennzeichnet, dass** die Fällung in einem Fällungsmilieu stattfindet, das zwei Dispersionsmittel umfasst, wovon eines (Dispersionsmittel (I)) eine größere Affinität für den Stoff ohne Lösemitteleigenschaften und das andere (Dispersionsmittel (II)) eine größere Affinität für das Lösemittel hat.

2. Verfahren nach Anspruch 1, **dadurch gekennzeichnet, dass** es sich bei dem Polymer um PVC handelt.

3. Verfahren nach einem beliebigen der vorhergehenden Ansprüche, wob ei :
- der Stoff ohne Lösemitteleigenschaften dem Fällungsmilieu allmählich zugesetzt wird und im Laufe dieses Zusatzes zunächst eine Phasentrennung (in eine kontinuierliche, lösemittelreiche Phase, in welcher das Polymer gelöst ist, und in eine dispergierte Phase, die aus Tropfen besteht, welche reich an dem Stoff ohne Lösemitteleigenschaften sind) ; und anschließend eine Phasenumkehr (woraufhin die kontinuierliche Phase nunmehr diejenige ist, welche reich an dem Stoff ohne Lösemitteleigenschaften ist, und die dispergierte Phase diejenige ist, welche das aufgelöste Polymer enthält) beobachtet wird
- der Stoff ohne Lösemitteleigenschaften dem Fällungsmilieu anfangs ausschließlich in flüssiger Form zugesetzt wird, und zwar in einer Menge (Q'), die ungleich Null ist, aber geringer als die Menge (Q), die erforderlich ist, um die Phasenumkehr auszulösen, und er dem Fällungsmilieu danach mindestens teilweise in Form von Dampf zugesetzt wird.

4. Verfahren nach einem beliebigen der vorhergehenden Ansprüche,
**dadurch gekennzeichnet, dass** das Dispersionsmittel (I) dem Fällungsmilieu hauptsächlich vor der Phasenumkehr zugesetzt wird.

5. Verfahren nach einem beliebigen der vorhergehenden Ansprüche,
**dadurch gekennzeichnet, dass** das Dispersionsmittel (II) dem Fällungsmilieu nach der Phasenumkehr zugesetzt wird.

6. Verfahren nach dem vorhergehenden Anspruch, **dadurch gekennzeichnet, dass** die Gesamtheit des Dispersionsmittels (I) und ein geringerer Gewichtsanteil (von weniger als 50 %) des Dispersionsmittels (II) dem Fällungsmilieu vor dem Zusatz den Stoffs ohne Lösemitteleigenschaften zugesetzt werden und dass der Rest des Dispersionsmittels (II) dem Fällungsmilieu nach der Phasenumkehr zugesetzt wird.

7. Verfahren nach einem beliebigen der vorhergehenden Ansprüche,
**dadurch gekennzeichnet, dass** es sich bei dem Stoff ohne Lösemitteleigenschaften um Wasser handelt und dass die Dispersionsmittel aus den Celluloseethern und den Polyvinylalkoholen ausgewählt sind.

8. Verfahren nach dem vorhergehenden Anspruch, **dadurch gekennzeichnet, dass** es sich bei den Dispersionsmitteln um Polyvinylalkohole mit unterschiedlichen Hydrolysegraden handelt, wobei das Dispersionsmittel (I) einen Hydrolysegrad (TH) hat, der höher als derjenige des Dispersionsmittels (II) ist.

9. Verfahren nach dem vorhergehenden Anspruch, **dadurch gekennzeichnet, dass** das Dispersionsmittel (I) einen TH von 65 bis 90 % hat und dass das Dispersionsmittel (II) einen TH von kleiner oder gleich 60 % hat.

10. Verfahren zur Wiederverwertung mindestens eines Gegenstandes auf Basis mindestens eines Polymers, wobei
a) der Gegenstand erforderlichenfalls in Fragmente mit einer mittleren Größe von 1 cm bis 50 cm zerkleinert wird
b) der Gegenstand oder die Gegenstandsfragmente mit einem Lösemittel in Kontakt gebracht wird/werden, welches dazu befähigt ist, das Polymer aufzulösen
c) das Polymer, das in Lösung vorliegt, unter Verwendung eines Verfahrens nach einem beliebigen der vorhergehenden Ansprüche zurückgewonnen wird.
